# EUROPEAN PATENT APPLICATION

(11) **EP 1 249 966 A2**
(43) Date of publication of application: **16.10.2002**
(21) Application number: 01118614.5
(22) Date of filing: 02.08.2001
(51) Int. Cl.: H04L 12/24, H04L 12/46

(54) **Apparatus, program and method for network administration and computer network system**

(30) Priority: 10.04.2001 JP 2001111109
(71) Applicant: Allied Telesis K. K., Shinagawa-ku, Tokyo (JP)
(72) Inventor: Sato, Takayuki, c/o Allied Telesis K.K., Tokyo (JP)
(74) Representative: Grünecker, Kinkeldey, Stockmair & Schwanhäusser Anwaltssozietät

(57) **Abstract**

A network administration apparatus for administrating a network device that performs communication in a network, includes: a VLAN information database operable to store one or more VLAN groups to which one or more network devices connected to the network are to belong, and one or more units of device identifying information respectively specifying the one or more network devices, each of the one or more VLAN groups corresponding to at least one unit of device identifying information; a receiving unit operable to receive device identifying information of a network device therefrom; a database updating unit operable to store the received device identifying information to correspond to a VLAN group to which the network device having the received device identifying information is to belong in the VLAN information database; and a setting unit operable to assign the VLAN group stored in the VLAN information database that corresponds to the received device identifying information to the network device having the received device identifying information.

## Description

### BACKGROUND OF THE INVENTION

### 1. Field of the Invention

The present invention relates to a network administration apparatus, a network administrating program, a network administrating method and a computer network system. More particularly, the present invention relates to a MAC (Media Access Control) address-based VLAN (Virtual Local Area Network) that can be configured based upon selected identifying information from a network device, which allows efficient VLAN settings with high security.

### 2. Description of the Related Art

A network administration apparatus or an interconnecting device that configures a MAC address-based VLAN includes a database in which a MAC address of a network device and a VLAN group to which the network device belongs are stored in such a manner that the MAC address and the VLAN group correspond to each other. When receiving a MAC address in a packet from a certain network device, the network administration apparatus or interconnecting device recognizes the VLAN group of the network device based on the received MAC address, and assigns the registered VLAN group to the network device.

In a computer network system forming a conventional type MAC address-based VLAN, however, a network administrator has to update the database in which the MAC address and the corresponding VLAN group are stored when a VLAN group is newly created, the VLAN group of a certain network device is changed, or a new network

### SUMMARY OF THE INVENTION

Therefore, it is an object of the present invention to provide a network administration apparatus, a network administrating program, a network administrating method and a computer network system, which are capable of overcoming the above drawbacks accompanying the conventional art. The above and other objects can be achieved by combinations described in the independent claims. The dependent claims define further advantageous and exemplary combinations of the present invention.

According to the first aspect of the present invention, a network administration apparatus for administrating a network device that performs communication in a network, comprising: a VLAN information database operable to store one or more VLAN groups to which one or more network devices connected to the network are to belong, and one or more units of device identifying information respectively specifying the one or more network devices, each of the one or more VLAN groups corresponding to at least one unit of device identifying information; and a receiving unit operable to receive device identifying information of a network device therefrom, characterized in that the network administration apparatus further comprises: a database updating unit operable to store the received device identifying information to correspond to a VLAN group to which the network device having the received device identifying information is to belong in the VLAN information database; and a setting unit operable to assign the VLAN group stored in the VLAN information database that corresponds to the received device identifying information to the network device having the received device identifying information.

The device identifying information may be a MAC address of the network device.

The VLAN information database may further store user identifying information, specifying a user of the network device, to correspond to the VLAN group of the network device, the receiving unit may further receive the user identifying information from the network device, and the database updating unit may store the device identifying information in the VLAN information database to correspond to the user identifying information and the VLAN group, in a case where the VLAN information database has already stored the user identifying information received by the receiving unit.

The receiving unit may receive the device identifying information of the network device, which belongs to a default VLAN group in the VLAN information database, from the network device, and the setting unit may assign, in a case where the device identifying information received by the receiving unit is included in the one or more units of device identifying information stored in the VLAN information database, the VLAN group corresponding to the received device identifying information to the network device of the default VLAN group.

The VLAN information database may further store one or more units of user identifying information respectively specifying users of the one or more network devices in such a manner that each unit of user identifying information corresponds to one of the one or more VLAN groups, the receiving unit may further receive, in a case where the received device identifying information is not stored in the VLAN information database, user identifying information from the network device of the default VLAN group, the database updating unit may store the device identifying information of the network device received by the receiving unit to correspond to the user identifying information and the VLAN group thereof in a case where the user identifying information received by the receiving unit is stored in the VLAN information database, and the setting unit may assign the VLAN group in the VLAN information database, that corresponds to the received device identifying information, to the network device of the default VLAN group.

The network administration apparatus may further comprise a detecting unit operable to detect a new network device that has been newly connected to the network or turned on, and the receiving unit may receive device identifying information of the new network device detected by the detecting unit from the new network device.

The detecting unit may further detect one of the one or more network devices that has been removed from the network or turned off, the detected network device having corresponding device identifying information stored in the VLAN information database, and the database updating unit may delete the corresponding device identifying information from the VLAN information database for the detected network device.

The database updating unit may delete the corresponding device identifying information of the network device detected by the detecting unit from the VLAN information database when a predetermined time period has passed after detection that the network device has been removed from the network or turned off.

The setting unit may assign a default VLAN group to a connection port of an interconnecting device corresponding to the network device detected by the detecting unit.

The network administration apparatus may belong to the default VLAN group, and the receiving unit may receive device identifying information of a network device of the default VLAN group therefrom by being connected to the connection port to which the default VLAN group is assigned.

According to the second aspect of the present invention, a network administrating program for administrating a network device that performs communication in a network, comprising: a storing module operable to store one or more VLAN groups to which one or more network devices connected to the network are to belong, and one or more units of device identifying information respectively specifying the one or more network devices, each of the one or more VLAN groups corresponding to at least one unit of device identifying information; and a receiving module operable to receive device identifying information of a network device therefrom, characterized in that the network administratingprogram further comprises: a database-updating module operable to store the received device identifying information to correspond to a VLAN group to which the network device having the received device identifying information is to belong; and a setting module operable to assign the VLAN group that corresponds to the received device identifying information, to the network device having the received device identifying information.

The storing module may further store user identifying information, specifying a user of the network device, to correspond to the VLAN group of the network device, the receiving module may further receive the user identifying information from the network device, and the database-updating module may store the device identifying information to correspond to the user identifying information and the VLAN group, in a case where the storing module has already stored the user identifying information received by the receiving module.

The receiving module may receive the device identifying information of the network device, which belongs to a default VLAN group, from the network device, and the setting module may assign, in a case where the device identifying information received by the receiving module is included in the one or more units of device identifying information stored by the storing module, one of the one or more VLAN groups that corresponds to the received device identifying information to the network device of the default VLAN group.

The storing module may further store one or more units of user identifying information respectively specifying users of the one or more network devices in such a manner that each unit of user identifying information corresponds to one of the one or more VLAN groups, the receiving module may further receive, in a case where the received device identifying information is not stored by the storing module, the user identifying information of the network device of the default VLAN group, the database-updating module may store the device identifying information of the network device received by the receiving module to correspond to the user identifying information and the VLAN group thereof in a case where the user identifying information received by the receiving module is stored by the storing module, and the setting module may assign the VLAN group that corresponds to the received device identifying information to the network device of the default VLAN group.

The network administrating program may further comprise a detecting module operable to detect a new network device that has been newly connected to the network or turned on, and the receiving module may receive device identifying information of the new network device detected by the detecting module from the new network device.

The detecting module may further detect one of the one or more network devices that has been removed from the network or turned off, the detected network device having corresponding device identifying information, and the database-updating module may delete the corresponding device identifying information for the detected network device.

The database-updating module may delete the corresponding device identifying information of the network device detected by the detecting module, when a predetermined time period has passed after detection that the network device has been removed from the network or turned off.

The setting module may assign a default VLAN group to a connection port of an interconnecting device corresponding to the network device detected by the detecting module.

The receiving module may receive device identifying information of a network device of the default VLAN group therefrom by being connected to the connection port to which the default VLAN group is assigned.

According to the third aspect of the present invention, a network administrating method for use in a network administration apparatus operable to administrate a network device that performs communication in a network, the network administration apparatus comprising a VLAN information database for storing one or more VLAN groups to which one or more network devices connected to the network are to belong, and one or more units of device identifying information respectively specifying the one or more network devices, each of the one or more VLAN groups corresponding to at least one unit of device identifying information, the method comprising receiving device identifying information of a network device therefrom, characterized in that the network administrating method further comprises: storing received device identifying information to correspond to a VLAN group to which the network device having the received device identifying information is to belong; and assigning the VLAN group that corresponds to the received device identifying information to the network device having the received device identifying information.

The network administrating method may further comprise storing user identifying information, specifying a user of the network device, to correspond to the VLAN group of the network device, and storing the received device identifying information to correspond to the stored user identifying information and the VLAN group.

The network administrating method may further comprise receiving device identifying information of the network device, which belongs to a default VLAN group, and in a case where the received device identifying information is included in the stored device identifying information, assigning one of the one or more VLAN groups that corresponds to the received device identifying information to the network device of the default VLAN group.

The network administrating method may further comprise storing one or more units of user identifying information respectively specifying users of the one or more network devices in such a manner that each unit of user identifying information corresponds to one of the one or more VLAN groups, in a case where the received device identifying information is not included in the stored device identifying information, storing the device identifying information of the network device of the default VLAN group to correspond to the stored user identifying information and the VLAN group thereof, and assigning the VLAN group that corresponds to the device identifying information of the network device of the default VLAN group to the network device.

The network administrating method may further comprise detecting a new network device that has been newly connected to the network or turned on, and receiving detected device identifying information of the new network device.

The network administrating method may further comprise detecting one of the one or more network devices that has been removed from the network or turned off, and deleting corresponding device identifying information for the detected network device.

The device identifying information of the network device may be deleted when a predetermined time period has passed after detection that the network device has been removed from the network or turned off.

The network administrating method may further comprise assigning a default VLAN group to a connection port of an interconnecting device corresponding to the detected network device.

The device identifying information of a network device of the default VLAN group may be received therefrom by connecting to the connection port to which the default VLAN group is assigned.

According to the fourth aspect of the present invention, a computer network system comprising: a network device operable to perform communication in a network; and a network administration apparatus operable to administrate the network device, the network administration apparatus comprising: a VLAN information database operable to store one or more VLAN groups to which one or more network devices connected to the network are to belong, and one or more units of device identifying information respectively specifying the one or more network devices, each of the one or more VLAN groups corresponding to at least one unit of device identifying information; and a receiving unit operable to receive, from the network device, device identifying information thereof, characterized in that the network administrating apparatus further comprises: a database updating unit operable to store the received device identifying information to correspond to a VLAN group to which the network device having the received device identifying information is to belong; and a setting unit operable to assign the VLAN group that corresponds to the received device identifying information to the network device having the received device identifying information.

The VLAN information database may further store user identifying information, specifying a user of the network device, to correspond to the VLAN group of the network device, the receiving unit may further receive the user identifying information from the network device, and the database updating unit may store the device identifying information in the VLAN information database to correspond to the user identifying information and the VLAN group in a case where the VLAN information database has already stored the user identifying information received by the receiving unit.

The receiving unit may receive the device identifying information of the network device, which belongs to a default VLAN group, from the network device, and the setting unit may assign, in a case where the device identifying information received by the receiving unit is included in the one or more units of device identifying information stored in the VLAN information database, one of the one or more VLAN groups that corresponds to the received device identifying information to the network device of the default VLAN group.

The VLAN information database may further store one or more units of user identifying information respectively specifying users of the one or more network devices in such a manner that each unit of user identifying information corresponds to one of the one or more VLAN groups, the receiving unit may further receive, in a case where the received device identifying information is not stored in the VLAN information database, the user identifying information of the network device of the default VLAN group, the database updating unit may store the device identifying information of the network device received by the receiving unit to correspond to the user identifying information and the VLAN group thereof in a case where the user identifying information received by the receiving unit--is-stored in the VLAN information database, and the setting unit may assign the VLAN group that corresponds to the device identifying information of the network device of the default VLAN group, to the network device.

The network administration apparatus may further comprise a detecting unit operable to detect a new network device that has been newly connected to the network or turned on, and the receiving unit may receive device identifying information of the new network device detected by the detecting unit from the new network device.

The detecting unit may further detect one of the one or more network devices that has been removed from the network or turned off, the detected network device having corresponding device identifying information stored in the VLAN information database, and the database updating unit may delete the corresponding device identifying information from the VLAN information database for the detected network device.

The database updating unit may delete the corresponding device identifying information of the network device detected by the detecting unit from the VLAN information database when a predetermined time period has passed after detection that the network device has been removed from the network or turned off.

The computer network system may further comprise an interconnecting device operable to connect the network administration apparatus and the network device. In this case, the setting unit may assign a default VLAN group, to a connection port of the interconnecting device corresponding to the network device detected by the detecting unit.

The network administration apparatus may belong to the default VLAN group, and the receiving unit may receive device identifying information of a network device of the default VLAN group therefrom by being connected to the connection port to which the default VLAN group is assigned.

The summary of the invention does not necessarily describe all necessary features of the present invention. The present invention may also be a sub-combination of the features described above. The above and other features and advantages of the present invention will become more apparent from the following description of the embodiments taken in conjunction with the accompanying drawings.

### BRIEF DESCRIPTION OF THE DRAWINGS

Fig. 1 shows an exemplary structure of a computer network system according to an embodiment of the present invention.
Fig. 2 shows an exemplary structure of a network administration apparatus according to the embodiment of the present invention.
Fig. 3 shows an exemplary data format of a VLAN information file stored in a VLAN information database.
Fig. 4 is a flowchart of a procedure for setting a VLAN group by the network administration apparatus according to the embodiment of the present invention.
Fig. 5 is a flowchart of a procedure for setting a default VLAN group by the network administration apparatus according to the embodiment of the present invention.
Fig. 6 shows a hardware configuration of the network administration apparatus 10 according to the embodiment of the present invention.

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

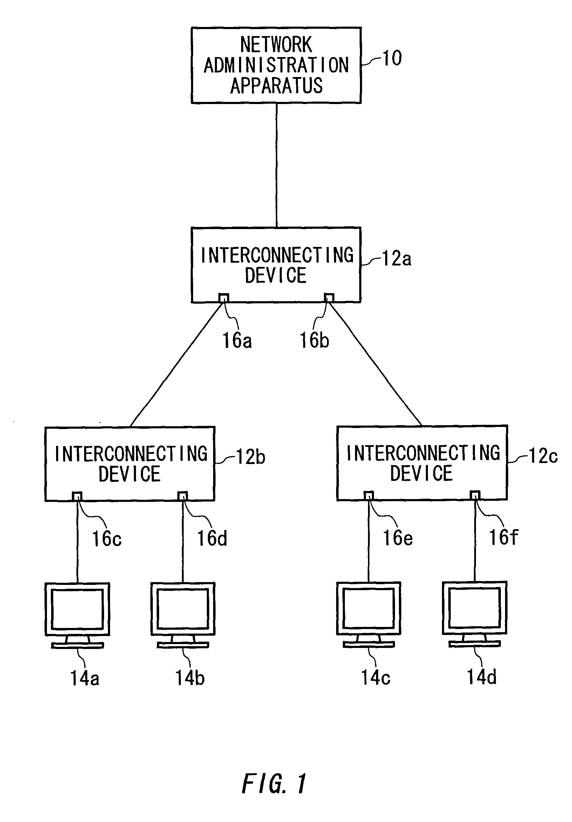

Fig. 1 illustrates a structure of a computer network system according to an embodiment of the present invention. The computer network system of the present embodiment includes network devices 14a, 14b, 14c and 14d each of which performs communication through a network, a network administration apparatus 10 that administrates the network devices 14a, 14b, 14c and 14d, and interconnecting devices 12a, 12b and 12c that connect the network devices 14a, 14b, 14c and 14d to the network administration apparatus 10.

The network administration apparatus 10 receives from each of the network devices 14a, 14b, 14c and 14d a MAC address thereof. The MAC address is an example of device identifying information that specifies the network device. The network administration apparatus 10 sets VLAN groups of the respective network devices 14a, 14b, 14c and 14d based on the received MAC addresses. More specifically, the network administration apparatus 10 assigns the VLAN group for the network devices 14a, 14b, 14c and 14d and the corresponding connection ports 16c, 16d, 16e and 16f of the interconnecting devices 12b and 12c, thereby enabling the network devices 14a, 14b, 14c and 14d to perform communications in the respective VLANs.

The interconnecting devices 12b and 12c may be wireless interconnecting devices that can perform wireless communications with the network devices 14a, 14b, 14c and 14d. In the computer network system including the wireless interconnecting devices, even if a location of the network device is changed, it is possible for the network device to perform wireless communication in the VLAN group to which the network device belongs by forming the MAC address-based VLAN, without changing the setting of the network device.

The network administration apparatus 10 receives, from each of the interconnecting devices 12b and 12c, the MAC address thereof, and sets the VLAN groups of the interconnecting devices 12b and 12c based on the received MAC addresses. In this case, the network administration apparatus 10 enables the interconnecting devices 12b and 12c to perform communications in the respective VLANs by assigning the VLAN group, to which the interconnecting devices 12b and 12c are to belong, to the connection ports 16a and 16b of the interconnecting device 12a to which the interconnecting devices 12b and 12c are respectively connected.

The network administration apparatus 10 may enable the interconnecting device 12b to perform communications in a plurality of VLANs by setting the connection port 16a of the interconnecting device 12a to a plurality of VLAN groups. For example, the network administration apparatus 10 enables the network devices 14a and 14b connected to the interconnecting device 12b to perform communications in VLAN 1 or 2 by setting the connection port 16a of the interconnecting device 12a to the VLAN 1 or 2.

The computer network system of the present embodiment may add a tag for specifying a VLAN to an Ethernet frame. In other words, the MAC address-based VLAN of the present embodiment may be combined with a tagging VLAN, in which the VLAN is divided based on information of the tag, or a multiple VLAN, in which a given connection port is made to belong to a plurality of VLAN groups.

Moreover, the network administration apparatus 10 may assign the VLAN groups of the interconnecting devices 12b and 12c to the connection ports 16a and 16b of the interconnecting device 12a by using a port-based VLAN, while setting the VLAN groups of the network devices 14a and 14b in the interconnecting device 12b and the VLAN groups of the network devices 14c and 14d in the interconnecting device 12c by using the MAC address-based VLAN.

According to the computer network system of the present embodiment, a more flexible network can be configured by using a combination of the port-based VLAN and the MAC address-based VLAN of the present embodiment.

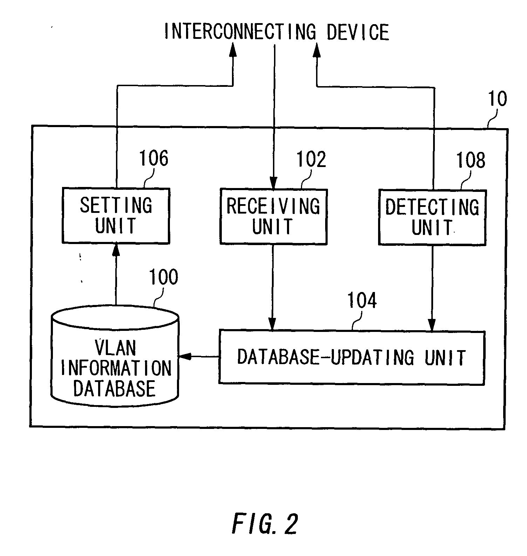

Fig. 2 illustrates a structure of the network administration apparatus 10 according to the present embodiment. The network administration apparatus 10 includes a VLAN information database 100 that stores a MAC address and a VLAN group of each of one or more network devices so as to correspond to each other, a receiving unit 102 that receives from a network device a MAC address thereof, a database updating unit 104 that stores the MAC address received by the receiving unit 102 in the VLAN information database 100, a setting unit 106 that assigns a desired VLAN group to a network device based on the information stored in the VLAN information database 100, and a detecting unit 108 that detects a network device newly connected to a network.

The detecting unit 108 detects the network device newly connected to the network or a network device in the network that has just been turned on. The receiving unit 102 then receives from the network device detected by the detecting unit 108 a MAC address thereof. The database updating unit 104 stores the MAC address received by the receiving unit 102 in the VLAN information database 100 in such a manner that the received MAC address corresponds to the VLAN group to which the network device having the received MAC address is to belong. The setting unit 106 then assigns the VLAN group stored in the VLAN information database 100 that corresponds to the received MAC address to the network device having the received MAC address.

The detecting unit 108 also detects a network device that has been removed from the network or that has been turned off. The database updating unit 104 then deletes the MAC address of the detected network device from the VLAN information database 100. The setting unit 106 assigns a default VLAN group to a connection port of an interconnecting device for the network device detected by the detecting unit 108, i.e., the default VLAN group is assigned to network devices which have not been authorized by the network administration apparatus 10. Further, the setting unit 106 may assign the default VLAN group to a deleted network device that has been removed or turned off as described above. Alternatively, the database updating unit 104 may delete the MAC address of the network device detected by the detecting unit 108 from the VLAN information database 100 when a predetermined time period has passed after detection that the network device was removed from the network or was turned off. Moreover, the VLAN information database 100 may store the MAC address of the detected network device so as to correspond to the default VLAN group.

According to the network administration apparatus 10 of the present embodiment, the database updating unit 104 stores a MAC address of a certain network device received by the receiving unit 102 from that network device. Thus, the network administrator can form the MAC address-based VLAN easily without registering MAC addresses of network devices in the VLAN information database 100 in advance. In addition, in the present embodiment, the network administration apparatus 10 deletes the MAC address of the network device that was removed from the network or was turned off from the VLAN information database 100 and assigns the default VLAN group to the network device having the deleted MAC address. Thus, it is possible to prevent improper entry to the VLAN.

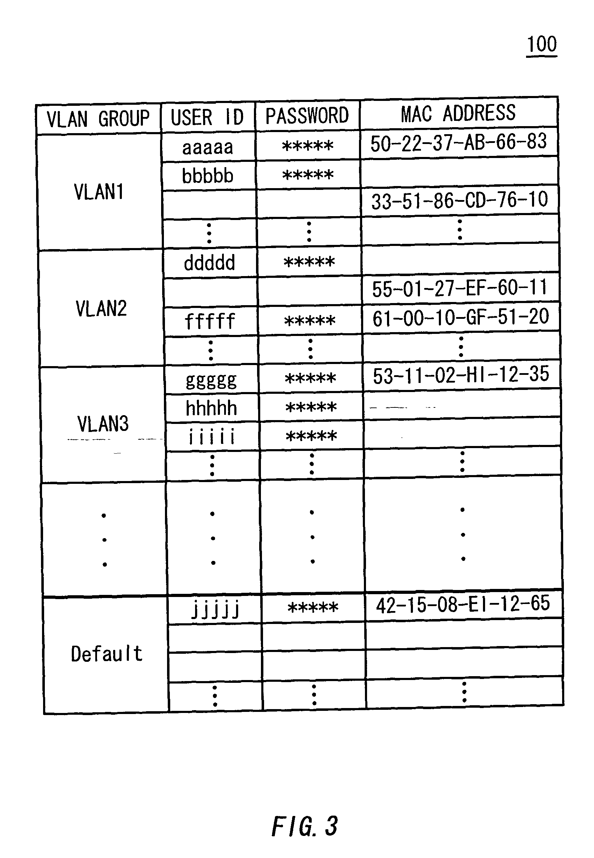

Fig. 3 shows an exemplary data format of a VLAN information file stored in the VLAN information database 100. The VLAN information file includes a VLAN group field, a user ID field, a password field and a MAC address field. The VLAN group field stores information for specifying a type of a VLAN. The user ID field stores user identifying information that specifies a user of a network device. The password field stores a password used for certifying the user specified by the user identifying information in the associated user ID field. The MAC address field stores a MAC address of a network device that is to belong to the VLAN group specified by the associated VLAN group field.

The user identifying information and the password that are to be stored in the user ID field and the password field, respectively, are registered by the user of the network device or the network administrator in advance. The MAC address received by the receiving unit 102 (see Fig. 2) from the network device through the network is stored in the MAC address field. The user of the network device logs in the network administration apparatus 10 by means of the network device and inputs the user ID and password. The database updating unit 104 of the network administration apparatus 10 stores the MAC address received by the receiving unit 102 after certifying the user ID and the password that have been input by using the user identifying information and the password stored in the user ID field and the password field, respectively.

In a case of a network device that cannot log in the network administration apparatus 10 through the network to send the user ID and the password to the network administration apparatus 10, the MAC address of the network device may be registered in advance in the VLAN information file in the VLAN information database 100 so as to correspond to a desired VLAN group. The setting unit 106 assigns the VLAN group specified by the VLAN group field to the network device having the MAC address stored in the corresponding MAC address field.

According to the network administration apparatus 10 of the present embodiment, it is possible to certify the user ID and password input in the network device by using the user ID and password registered in advance and to register the MAC address of the network device that has been certified. Thus, the administrator can form a MAC address-based VLAN not by registering the MAC address, that is typically a complicated character string, in the VLAN information database 100, but by registering the user ID and the password therein.

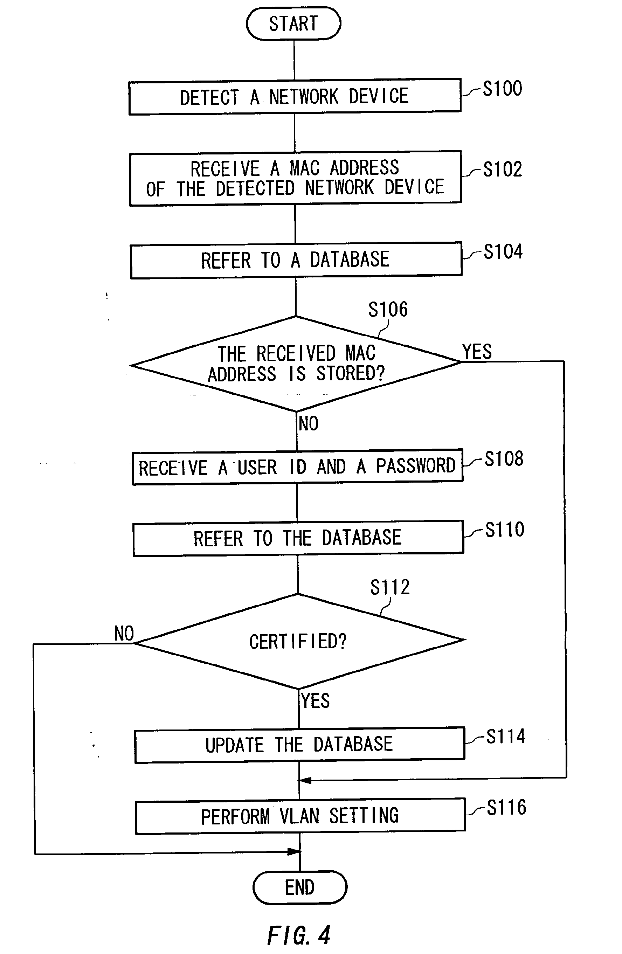

Fig. 4 is a flowchart of a VLAN setting procedure in the network administration apparatus 10. First, the detecting unit 108 detects a network device that has been connected to the network or has just been turned on (S100). More specifically, the detecting unit 108 receives information of a connection port of an interconnecting device based on linkup trap from the interconnecting device so as to detect the network device newly connected to the network or that has just been turned on.

In a case where a MAC address of a network device is added to the information of the connection port of the interconnecting device, the interconnecting device may send the added MAC address to the network administration apparatus 10. In this case, the detecting unit 108 detects the network device newly connected to the network or turned on by receiving the MAC address from the interconnecting device.

The network device newly connected to the network or newly turned on is set to belong to the default VLAN group since the default VLAN group is assigned to the connection port of the interconnecting device that is not performing communication, and then performs communication with the network administration apparatus 10 that belongs to the default VLAN group. Then, the receiving unit 102 of the network administration apparatus 10 receives the MAC address of the network device to which the default VLAN group is assigned and has been detected by the detecting unit 108 therefrom (S102).

The database updating unit 104 then refers to the VLAN information database 100 (S104), and determines whether or not the MAC address received by the receiving unit 102 is stored in the VLAN information database 100 (S106). In a case where the database updating unit 104 determines that the received MAC address is stored in the VLAN information database 100 in Step S106, the setting unit 106 changes the VLAN setting of the network device that belongs to the default VLAN group so as to belong to the other VLAN group that is stored in the VLAN information database 100 to correspond to the MAC address received by the receiving unit 102 (S116).

In another case where the database updating unit 104 does not determine that the MAC address received by the receiving unit 102 is stored in the VLAN information database 100 in Step S106, the receiving unit 102 receives, from the network device belonging to the default VLAN group, the user ID and the password thereof (S108). The database updating unit 104 then refers to the VLAN information database 100 (S110), and certifies the user ID and the password received by the receiving unit 102 (S112). When the user ID and the password are not certified in Step S112, the setting unit 106 does not change the VLAN setting of the network device that belongs to the default VLAN group.

When the user ID and the password have been successfully certified in Step S112, the database updating unit 104 then stores the MAC address received by the receiving unit 102 in the VLAN information database 100 in such a manner that the received MAC address corresponds to the user ID and the password both received by the receiving unit 102 (S114). The setting unit 106 then changes the VLAN setting of the network device that belongs to the default VLAN group so as to make that network device belong to the VLAN group stored in the VLAN information database 100 to correspond to the user ID and the password received by the receiving unit 102 (S116).

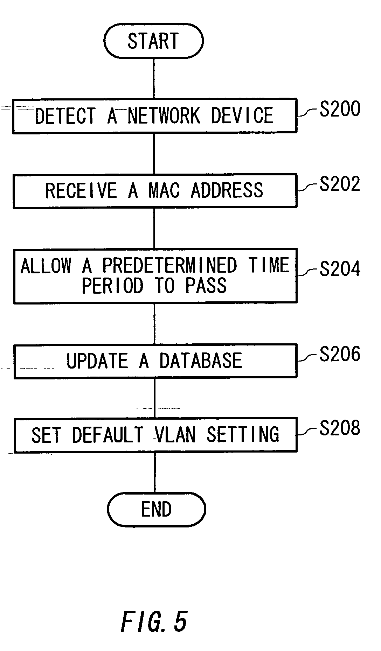

Fig. 5 is a flowchart of a procedure for assigning the default VLAN group to a network device in the network administration apparatus 10. First, the detecting unit 108 detects the network device that has been removed from the network or has been turned off (S200). More specifically, the detecting unit 108 receives information of the connection port of the interconnecting device based on linkDown trap from the interconnecting device, so as to detect the network device removed from the network or turned off.

In a case where a MAC address of a network device is deleted from the information of the connection port of the interconnecting device, the interconnecting device may send the deleted MAC address to the network administration apparatus 10. The detecting unit 108 then detects the network device removed from the network or turned off by receiving the MAC address from the interconnecting unit.

Then, the receiving unit 102 receives, from the interconnecting device to which network device detected by the detecting unit 108 is connected, the MAC address thereof (S202). In a case where a predetermined time period has passed after the communication from the network device having the MAC address received by the receiving unit 102 was stopped (S204), the database updating unit 104 deletes the received MAC address from the VLAN information database 100 (S206). The setting unit 106 then assigns the default VLAN group to the connection port of the interconnecting device for the network device detected by the detecting unit 108 (S208).

In an alternative embodiment, an effective time period in which each network device can perform communication in the VLAN may be determined in advance, and the database updating unit 104 may delete from the VLAN information database 100 the MAC address of the network device for which the predetermined effective time period has passed. Moreover, in response to a deletion request from the user of the network device, the network administrator may delete the MAC address of the network device for which the deletion request has been issued from the VLAN information database 100.

According to the present embodiment, the network administration apparatus 100 certifies the user of the network device and registers the MAC address of the network device of the certified user in the VLAN information database 100. Thus, a high-security MAC address-based VLAN can be formed. Moreover, it is possible to prevent an improper user from entering the VLAN by deleting the MAC address of the network device that is not performing communication from the VLAN information database 100 and assigning the default VLAN group to the connection port of the interconnecting device that is not performing communication.

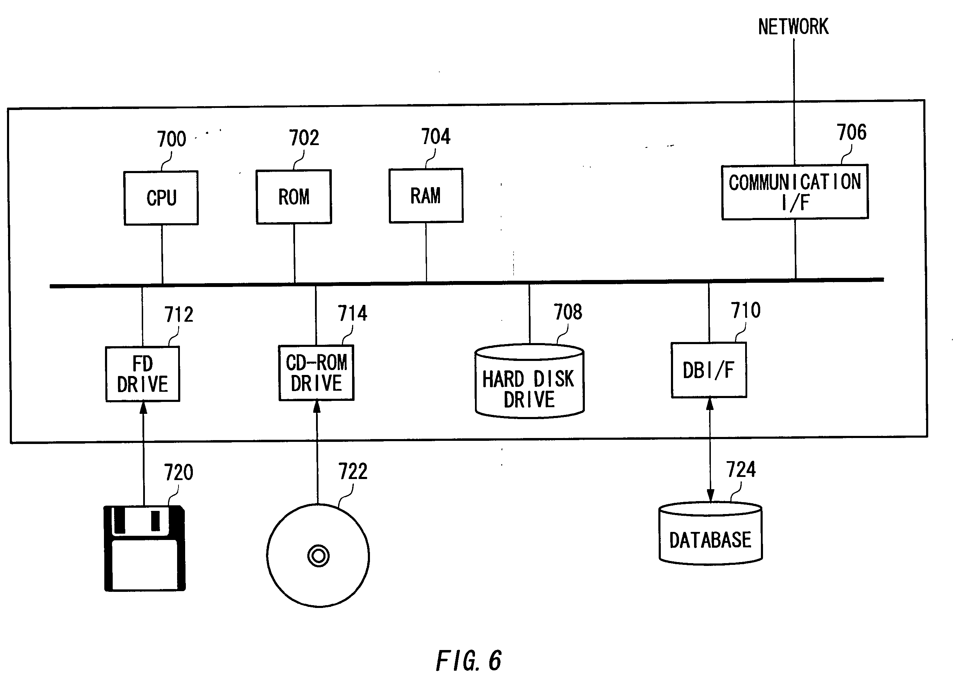

Fig. 6 shows an exemplary hardware structure of the network administration apparatus 10. The network administration apparatus 10 includes a CPU 700, a ROM 702, a RAM 704, a communication interface 706, a hard disk drive 708, a database interface 710, a floppy disk drive 712 and a CD-ROM drive 714. The CPU 700 operates based on at least one program stored in the ROM 702 and RAM 704. The communication interface 706 allows the communication with the network administration apparatus through the network. The database interface 710 writes data into a database and updates the contents of the database. The hard disk drive 708, that is an example of a storage device, stores setting information and the program for the operation of the CPU 700.

The floppy disk drive 712 reads data or a program from a floppy disk 720 to provide the read data or program to the CPU 700. The CD-ROM drive 714 reads data or a program from a CD-ROM 722 to provide the read data or program to the CPU 700. The communication interface 706 can be connected to the network administration apparatus so as to perform data transmission and data receiving. The database interface 710 can be connected to a database 724 so as to perform data transmission and data receiving.

Software executed by the CPU 700 is provided to a user while being stored in a recording medium such as the floppy disk 720 or the CD-ROM 722. The software stored in the recording medium may be compressed or not-compressed. The software is installed from the recording medium into the hard disk drive 708, and is then read into the RAM 704 so that the CPU 700 executes the software.

The software provided while being stored in the recording medium, that is the software to be installed into the hard disk drive 708, functionally includes a receiving module, a detecting module, a storing module, a database-updating module, and a setting module. Operations that are to be executed by the CPU 700 in accordance with instructions of the--respective module to the computer are the same as the functions and operations of the corresponding components in the network administration apparatus 10 of the present embodiment, respectively, and therefore the description thereof is omitted.

A part or all of the functions and operations of the network administration apparatus 10 according to the embodiment described in the present application can be stored in the floppy disk 720 or the CD-ROM 722 shown in Fig. 6 as an example of the recording medium.

These programs may be read directly into the RAM from the recording medium, or read into the RAM after being installed into the hard disk drive from the recording medium. Moreover, the above-mentioned programs may be stored in a single recording medium or a plurality of recording media. Furthermore, the programs may be stored while being encoded.

As the recording medium, other than the floppy disk and the CD-ROM, an optical recording medium such as a DVD or a PD, a magneto-optical recording medium such as an MD, a tape-like medium, a magnetic recording medium, or a semiconductor memory such as an IC card or a miniature card can be used. Moreover, a storage device such as a hard disk or a RAM provided in a server system connected to an exclusive communication network or the Internet may be used as the recording medium, so that the program can be provided to the network administration apparatus 10 through the communication network or the Internet. Such a recording medium is used only for manufacturing the network administration apparatus 10 and it is therefore apparent that manufacturing or selling such a recording medium as business can constitute infringement of the right based on the present application.

As is apparent from the above, according to the present invention, a network administration apparatus, a network administrating program, a network administrating method and a computer network system that allow a high-security MAC address-based VLAN to be formed in which the VLAN setting can be performed efficiently without setting the MAC address by the network administrator.

Although the present invention has been described by way of exemplary embodiments, it should be understood that those skilled in the art might make many changes and substitutions without departing from the spirit and the scope of the present invention which is defined only by the appended claims.

## Claims

1. A network administration apparatus for administrating a network device that performs communication in a network, comprising: a VLAN information database operable to store one or more VLAN groups to which one or more network devices connected to said network are to belong, and one or more units of device identifying information respectively specifying said one or more network devices, each of said one or more VLAN groups corresponding to at least one unit of device identifying information; and a receiving unit operable to receive device identifying information of a network device therefrom,
**CHARACTERIZED IN THAT** the network administration apparatus further comprises:
a database updating unit operable to store said received device identifying information to correspond to a VLAN group to which said network device having said received device identifying information is to belong in said VLAN information database; and
a setting unit operable to assign said VLAN group stored in said VLAN information database that corresponds to said received device identifying information to said network device having said received device identifying information.

2. A network administration apparatus as claimed in claim 1,
**CHARACTERIZED IN THAT** said device identifying information is a MAC address of said network device.

3. A network administration apparatus as claimed in claim 1,
**CHARACTERIZED IN THAT** said VLAN information database further stores user identifying information, specifying a user of said network device, to correspond to said VLAN group of said network device,
said receiving unit further receives said user identifying information from said network device, and
said database updating unit stores said device identifying information in said VLAN information database to correspond to said user identifying information and said VLAN group, in a case where said VLAN information database has already stored said user identifying information received by said receiving unit.

4. A network administration apparatus as claimed in claim 1,
**CHARACTERIZED IN THAT** said receiving unit receives said device identifying information of said network device, which belongs to a default VLAN group in said VLAN information database, from said network device, and
said setting unit assigns, in a case where said device identifying information received by said receiving unit is included in said one or more units of device identifying information stored in said VLAN information database, said VLAN group corresponding to said received device identifying information to said network device of said default VLAN group.

5. A network administration apparatus as claimed in claim 4,
**CHARACTERIZED IN THAT** said VLAN information database further stores one or more units of user identifying information respectively specifying users of said one or more network devices in such a manner that each unit of user identifying information corresponds to one of said one or more VLAN groups,
said receiving unit further receives, in a case where said received device identifying information is not stored in said VLAN information database, user identifying information from said network device of said default VLAN group,
said database updating unit stores said device identifying information of said network device received by said receiving unit to correspond to said user identifying information and said VLAN group thereof in a case where said user identifying information received by said receiving unit is stored in said VLAN information database, and
said setting unit assigns said VLAN group in said VLAN information database, that corresponds to said received device identifying information, to said network device of said default VLAN group.

6. A network administration apparatus as claimed in claim 1,
**CHARACTERIZED IN THAT** the network administration apparatus further comprises a detecting unit operable to detect a new network device that has been newly connected to said network or turned on, and
said receiving unit receives device identifying information of said new network device detected by said detecting unit from said new network device.

7. A network administration apparatus as claimed in claim 6,
**CHARACTERIZED IN THAT** said detecting unit further detects one of said one or more network devices that has been removed from said network or turned off, said detected network device having corresponding device identifying information stored in said VLAN information database, and
said database updating unit deletes said corresponding device identifying information from said VLAN information database for said detected network device.

8. A network administration apparatus as claimed in claim 7,
**CHARACTERIZED IN THAT** said database updating unit deletes said corresponding device identifying information of said network device detected by said detecting unit from said VLAN information database when a predetermined time period has passed after detection that said network device has been removed from said network or turned off.

9. A network administration apparatus as claimed in claim 7,
**CHARACTERIZED IN THAT** said setting unit assigns a default VLAN group to a connection port of an interconnecting device corresponding to said network device detected by said detecting unit.

10. A network administration apparatus as claimed in claim 9,
**CHARACTERIZED IN THAT** said network administration apparatus belongs to said default VLAN group, and
said receiving unit receives device identifying information of a network device of said default VLAN group therefrom by being connected to said connection port to which said default VLAN group is assigned.

11. A network administrating program for administrating a network device that performs communication in a network, comprising: a storing module operable to store one or more VLAN groups to which one or more network devices connected to said network are to belong, and one or more units of device identifying information respectively specifying said one or more network devices, each of said one or more VLAN groups corresponding to at least one unit of device identifying information; and a receiving module operable to receive device identifying information of a network device therefrom, **CHARACTERIZED IN THAT** the network administrating program further comprises:
a database-updating module operable to store said received device identifying information to correspond to a VLAN group to which said network device having said received device identifying information is to belong; and
a setting module operable to assign said VLAN group that corresponds to said received device identifying information, to said network device having said received device identifying information.

12. A network administrating program as claimed in claim 11,
**CHARACTERIZED IN THAT** said storing module further stores user identifying information, specifying a user of said network device, to correspond to said VLAN group of said network device,
said receiving module further receives said user identifying information from said network device, and
said database-updating module stores said device identifying information to correspond to said user identifying information and said VLAN group, in a case where said storing module has already stored said user identifying information received by said receiving module.

13. A network administrating program as claimed in claim 11,
**CHARACTERIZED IN THAT** said receiving module receives said device identifying information of said network device, which belongs to a default VLAN group, from said network device, and
said setting module assigns, in a case where said device identifying information received by said receiving module is included in said one or more units of device identifying information stored by said storing module, one of said one or more VLAN groups that corresponds to said received device identifying information to said network device of said default VLAN group.

14. A network administrating program as claimed in claim 13,
**CHARACTERIZED IN THAT** said storing module further stores one or more units of user identifying information respectively specifying users of said one or more network devices in such a manner that each unit of user identifying information corresponds to one of said one or more VLAN groups,
said receiving module further receives, in a case where said received device identifying information is not stored by said storing module, said user identifying information of said network device of said default VLAN group,
said database-updating module stores said device identifying information of said network device received by said receiving module to correspond to said user identifying information and said VLAN group thereof in a case where said user identifying information received by said receiving module is stored by said storing module, and
said setting module assigns said VLAN group that corresponds to said received device identifying information to said network device of said default VLAN group.

15. A network administrating program as claimed in claim 11,
**CHARACTERIZED IN THAT** the network administrating program further comprises a detecting module operable to detect a new network device that has been newly connected to said network or turned on, and
said receiving module receives device identifying information of said new network device detected by said detecting module from said new network device.

16. A network administrating program as claimed in claim 15,
**CHARACTERIZED IN THAT** said detecting module further detects one of said one or more network devices that has been removed from said network or turned off, said detected network device having corresponding device identifying information, and
said database-updating module deletes said corresponding device identifying information for said detected network device.

17. A network administrating program as claimed in claim 16,
**CHARACTERIZED IN THAT** said database-updating module deletes said corresponding device identifying information of said network device detected by said detecting module, when a predetermined time period has passed after detection that said network device has been removed from said network or turned off.

18. A network administrating program as claimed in claim 16,
**CHARACTERIZED IN THAT** said setting module assigns a default VLAN group to a connection port of an interconnecting device corresponding to said network device detected by said detecting module.

19. A network administrating program as claimed in claim 18,
**CHARACTERIZED IN THAT** said receiving module receives device identifying information of a network device of said default VLAN group therefrom by being connected to said connection port to which said default VLAN group is assigned.

20. A network administrating method for use in a network administration apparatus operable to administrate a network device that performs communication in a network, said network administration apparatus comprising a VLAN information database for storing one or more VLAN groups to which one or more network devices connected to said network are to belong, and one or more units of device identifying information respectively specifying said one or more network devices, each of said one or more VLAN groups corresponding to at least one unit of device identifying information, said method comprising receiving device identifying information of a network device therefrom, **CHARACTERIZED IN THAT** the network administrating method further comprises:
storing received device identifying information to correspond to a VLAN group to which said network device having said received device identifying information is to belong; and
assigning said VLAN group that corresponds to said received device identifying information to said network device having said received device identifying information.

21. A network administrating method as claimed in claim 20,
**CHARACTERIZED IN THAT** the network administrating method further comprises storing user identifying information, specifying a user of said network device, to correspond to said VLAN group of said network device, and
storing said received device identifying information to correspond to said stored user identifying information and said VLAN group.

22. A network administrating method as claimed in claim 20,
**CHARACTERIZED IN THAT** the network administrating method further comprises receiving device identifying information of said network device, which belongs to a default VLAN group, and
in a case where said received device identifying information is included in said stored device identifying information, assigning one of said one or more VLAN groups that corresponds to said received device identifying information to said network device of said default VLAN group.

23. A network administrating method as claimed in claim 22,
**CHARACTERIZED IN THAT** the network administrating method further comprises storing one or more units of user identifying information respectively specifying users of said one or more network devices in such a manner that each unit of user identifying information corresponds to one of said one or more VLAN groups,
in a case where said received device identifying information is not included in said stored device identifying information, storing said device identifying information of said network device of said default VLAN group to correspond to said stored user identifying information and said VLAN group thereof, and
assigning said VLAN group that corresponds to said device identifying information of said network device of said default VLAN group to said network device.

24. A network administrating method as claimed in claim 20,
**CHARACTERIZED IN THAT** the network administrating method further comprises detecting a new network device that has been newly connected to said network or turned on, and
receiving detected device identifying information of said new network device.

25. A network administrating method as claimed in claim 24,
**CHARACTERIZED IN THAT** the network administrating method further comprises detecting one of said one or more network devices that has been removed from said network or turned off, and
deleting corresponding device identifying information for said detected network device.

26. A network administrating method as claimed in claim 25,
**CHARACTERIZED IN THAT** said device identifying information of said network device is deleted when a predetermined time period has passed after detection that said network device has been removed from said network or turned off.

27. A network administrating method as claimed in claim 25,
**CHARACTERIZED IN THAT** the network administrating method further comprises assigning a default VLAN group to a connection port of an interconnecting device corresponding to said detected network device.

28. A network administrating method as claimed in claim 27,
**CHARACTERIZED IN THAT** device identifying information of a network device of said default VLAN group is received therefrom by connecting to said connection port to which said default VLAN group is assigned.

29. A computer network system comprising: a network device operable to perform communication in a network; and a network administration apparatus operable to administrate said network device, said network administration apparatus comprising: a VLAN information database operable to store one or more VLAN groups to which one or more network devices connected to said network are to belong, and one or more units of device identifying information respectively specifying said one or more network devices, each of said one or more VLAN groups corresponding to at least one unit of device identifying information; and a receiving unit operable to receive, from said network device, device identifying information thereof, **CHARACTERIZED IN THAT** the network administration apparatus further comprises:
a database updating unit operable to store said received device identifying information to correspond to a VLAN group to which said network device having said received device identifying information is to belong; and
a setting unit operable to assign said VLAN group that corresponds to said received device identifying information to said network device having said received device identifying information.

30. A computer network system as claimed in claim 29,
**CHARACTERIZED IN THAT** said VLAN information database further stores user identifying information, specifying a user of said network device, to correspond to said VLAN group of said network device,
said receiving unit further receives said user identifying information from said network device, and
said database updating unit stores said device identifying information in said VLAN information database to correspond to said user identifying information and said VLAN group in a case where said VLAN information database has already stored said user identifying information received by said receiving unit.

31. A computer network system as claimed in claim 29,
**CHARACTERIZED IN THAT** said receiving unit receives said device identifying information of said network device, which belongs to a default VLAN group, from said network device, and
said setting unit assigns, in a case where said device identifying information received by said receiving unit is included in said one or more units of device identifying information stored in said VLAN information database, one of said one or more VLAN groups that corresponds to said received device identifying information to said network device of said default VLAN group.

32. A computer network system as claimed in claim 31,
**CHARACTERIZED IN THAT** said VLAN information database further stores one or more units of user identifying information respectively specifying users of said one or more network devices in such a manner that each unit of user identifying information corresponds to one of said one or more VLAN groups,
said receiving unit further receives, in a case where said received device identifying information is not stored in said VLAN information database, said user identifying information of said network device of said default VLAN group,
said database updating-unit stores said device identifying information of said network device received by said receiving unit to correspond to said user identifying information and said VLAN group thereof in a case where said user identifying information received by said receiving unit is stored in said VLAN information database, and
said setting unit assigns said VLAN group that corresponds to said device identifying information of said network device of said default VLAN group, to said network device.

33. A computer network system as claimed in claim 29,
**CHARACTERIZED IN THAT** said network administration apparatus further comprises a detecting unit operable to detect a new network device that has been newly connected to said network or turned on, and
said receiving unit receives device identifying information of said new network device detected by said detecting unit from said new network device.

34. A computer network system as claimed in claim 33,
**CHARACTERIZED IN THAT** said detecting unit further detects one of said one or more network devices that has been removed from said network or turned off, said detected network device having corresponding device identifying information stored in said VLAN information database, and
said database updating unit deletes said corresponding device identifying information from said VLAN information database for said detected network device.

35. A computer network system as claimed in claim 34,
**CHARACTERIZED IN THAT** said database updating unit deletes said corresponding device identifying information of said network device detected by said detecting unit from said VLAN information database when a predetermined time period has passed after detection that said network device has been removed from said network or turned off.

36. A computer network system as claimed in claim 34,
**CHARACTERIZED IN THAT** the computer network system further comprises an interconnecting device operable to connect said network administration apparatus and said network device,
wherein said setting unit assigns a default VLAN group, to a connection port of said interconnecting device corresponding to said network device detected by said detecting unit.

37. A computer network system as claimed in claim 36,
**CHARACTERIZED IN THAT** said network administration apparatus belongs to said default VLAN group, and
said receiving unit receives device identifying information of a network device of said default VLAN group therefrom by being connected to said connection port to which said default VLAN group is assigned.
